# EUROPEAN PATENT APPLICATION

(11) **EP 4 574 255 A1**
(43) Date of publication of application: **25.06.2025**
(21) Application number: 24221786.7
(22) Date of filing: 19.12.2024
(51) Int. Cl.: B01J 23/00, B01J 23/46, B01J 35/30, B01J 35/61, B01J 35/70, B01J 37/02, B01J 37/10, B01J 37/18, C01B 3/04

(54) **CATALYST FOR AMMONIA DECOMPOSITION, AND METHOD OF PREPARING CATALYST FOR AMMONIA DECOMPOSITION**

(30) Priority: 20.12.2023 KR 20230187242
(71) Applicant: SK Innovation Co., Ltd., Seoul 03188 (KR)
(72) Inventor: IM, Ju Hwan, 34124 Daejeon (KR); SUNG, Jong Baek, 34124 Daejeon (KR); CHOI, Jae Suk, 34124 Daejeon (KR); LEE, Seung Woo, 34124 Daejeon (KR); LEE, Chang Q, 34124 Daejeon (KR)
(74) Representative: Prüfer & Partner mbB Patentanwälte · Rechtsanwälte

(57) **Abstract**

In a method of preparing an ammonia decomposition catalyst according to embodiments of the present disclosure, a mixture of a metal oxide including lanthanum and a heterogeneous metal and aluminum oxide is prepared, the mixture was subj ected to steam treatment to form a carrier, and an active metal is supported on the carrier to prepare an ammonia decomposition catalyst. The ammonia decomposition catalyst according to embodiments of the present disclosure is prepared by the above-described preparation method.

## Description

### [BACKGROUND OF THE INVENTION]

### Field of the Invention

The present disclosure relates to a catalyst for ammonia decomposition ("an ammonia decomposition catalyst") and a method of preparing an ammonia decomposition catalyst.

### Description of the Related Art

Recently, due to problems of environmental pollution, techniques for reducing greenhouse gases or harmful gases in the atmosphere are being developed. Accordingly, there is a growing demand for a renewable alternative energy to replace the use of fossil fuels such as petroleum and coal. Hydrogen may be mainly used as one of the renewable alternative energy.

Ammonia (NH₃) is a carbon-free fuel and may efficiently store and transport hydrogen. For example, ammonia may be decomposed to generate hydrogen (H₂) and nitrogen (N₂), and the hydrogen generated from the ammonia may be supplied to a fuel cell and other devices using hydrogen. However, the reaction in which ammonia is decomposed into hydrogen and nitrogen is an endothermic reaction, and a large amount of heat and energy may be consumed during the decomposition process.

Therefore, in order to efficiently decompose ammonia while reducing consumption amounts of heat and energy, an ammonia decomposition catalyst may be used. The ammonia decomposition catalyst may promote the decomposition reaction of ammonia by using a transition metal such as nickel or iron, or an active metal such as a platinum group metal, for example, palladium or ruthenium, etc.

During the ammonia decomposition reaction, the performance of the ammonia decomposition catalyst may decreases due to other components included in the ammonia gas, such as moisture. Accordingly, a decomposition rate of ammonia may be reduced or a production efficiency of hydrogen may decreases. Therefore, the development of an ammonia decomposition catalyst having improved stability and lifespan characteristics while also having high activity is required despite the existence of the moisture.

### [SUMMARY OF THE INVENTION]

An object of the present disclosure is to provide an ammonia decomposition catalyst having improved moisture stability and activity.

Another object of the present disclosure is to provide a method of preparing an ammonia decomposition catalyst having improved moisture stability and activity.

To achieve the above objects, according to an aspect of the present invention, there is provided a method of preparing a catalyst for ammonia decomposition, which includes: preparing a mixture of a complex oxide including a lanthanum and heterogeneous metal-containing metal oxide and an aluminum oxide; performing steam treatment on the mixture to form a carrier; and supporting an active metal on the carrier.

In some embodiments, the steam treatment may be performed at a temperature of 300°C to 700°C.

In some embodiments, the steam treatment may be performed in a steam atmosphere having a moisture content of 500 ppm to 40,000 ppm.

In some embodiments, the steam treatment may be performed for 1 hour to 100 hours.

In some embodiments, the carrier may include a lanthanum and aluminum-containing complex oxide and a heterogeneous metal oxide.

In some embodiments, the aluminum oxide may react with lanthanum by the steam treatment to be converted into the lanthanum and aluminum-containing complex oxide.

In some embodiments, the heterogeneous metal oxide may have a porous structure and/or a structural defect.

In some embodiments, the heterogeneous metal oxide having a porous structure and/or a structural defect may be formed as lanthanum is removed from the lanthanum and heterogeneous metal-containing metal oxide.

In some embodiments, the lanthanum and aluminum-containing complex oxide may have a perovskite crystal structure.

In some embodiments, the active metal may be supported on the surface of the carrier by performing heat treatment on the carrier and the active metal in a reducing atmosphere.

In some embodiments, a content of the active metal supported on the heterogeneous metal oxide may be greater than a content of the active metal supported on the lanthanum and aluminum-containing complex oxide.

In some embodiments, the active metal may be selected from the group of osmium (Os), nickel (Ni), iron (Fe), cobalt (Co), platinum (Pt), palladium (Pd), ruthenium (Ru), vanadium (V), copper (Cu), chromium (Cr), tungsten (W), molybdenum (Mo), iridium (Ir), rhodium (Rh). In some embodiments, the active metal may include ruthenium (Ru).

In some embodiments, the heterogeneous metal may include cerium (Ce) or zirconium (Zr).

According to another aspect of the present invention, there is provided a catalyst for ammonia decomposition prepared by the method according to the above embodiments.

According to another aspect of the present invention, there is provided a catalyst for ammonia decomposition which includes: a carrier including a lanthanum and aluminum-containing complex oxide, and a heterogeneous metal oxide having a porous structure and/or a structural defect; and an active metal supported on the carrier, wherein a content of the active metal supported on the heterogeneous metal oxide may be greater than a content of the active metal supported on the lanthanum and aluminum-containing complex oxide. In some embodiments, this catalyst may be prepared by the method according to the above embodiments

According to another aspect of the present invention, there is provided a catalyst for ammonia decomposition which includes: a carrier including a lanthanum and aluminum-containing complex oxide, and a heterogeneous metal oxide having a porous structure and/or a structural defect; and an active metal supported on the carrier, wherein the active metal is dispersed in the carrier without aggregation of the active metal, wherein when the catalyst is subjected to a steam treatment the ammonia decomposition rate of the catalyst under a condition of 30,000 ppm of water moisture (H₂O) does not decrease below 10%, or not below 30 %, when measured at any temperature among 400°C, 450°C and 500°C respectively at a time point of 20 hours after start. The decomposition rate of the catalyst subjected to a steam treatment may be measured as described in the description below.

In some embodiments, the active metal is dispersed in the carrier ... as determined by a moisture stability test, by an extended X-ray absorption fine structure (EXAFS), by an imaging using a high-angle annular dark-field scanning transmission electron microscopy (STEM), and/or by an XRD crystal structure analysis, as respectively described in the description below.

In some embodiments, the carrier may have a specific surface area of 80 m²/g to 200 m²/g.

In some embodiments, the lanthanum and aluminum-containing complex oxide may have a perovskite crystal structure.

According to embodiments of the present disclosure, an ammonia decomposition catalyst may be prepared by performing steam treatment on a lanthanum and heterogeneous metal-containing metal oxide and an aluminum oxide to form a metal oxide carrier, and supporting an active metal on the carrier. Accordingly, the dispersion of the active metal in the ammonia decomposition catalyst may be increased, and the ammonia decomposition catalyst may have high moisture stability.

The carrier may include a heterogeneous metal oxide having a porous structure and/or a structural defect. Accordingly, the dispersion of the active metal may be improved thereby having high catalytic activity, and the activity of the catalyst may be maintained at a high level for a long period of time, especially under moisture.

The carrier may include a complex oxide having a perovskite structure. Accordingly, electron donation characteristic to the active metal may be further improved, and the conversion performance of the ammonia decomposition catalyst may be improved.

### [BRIEF DESCRIPTION OF THE DRAWINGS]

The above and other objects, features and other advantages of the present invention will be more clearly understood from the following detailed description taken in conjunction with the accompanying drawings, in which:
FIG. 1 is a schematic process flowchart for describing a method of preparing an ammonia decomposition catalyst according to exemplary embodiments;
FIG. 2 is a Ru K-edge EXAFS graph of an ammonia decomposition catalyst of Comparative Example 1;
FIG. 3A is an STEM image of the ammonia decomposition catalyst of Comparative Example 1 in an initial state;
FIG. 3B is an STEM image of the ammonia decomposition catalyst of Comparative Example 1 after performing heat treatment for 1 hour under a moisture content condition of 30,000 ppm;
FIG. 3C is an STEM image of the ammonia decomposition catalyst of Comparative Example 1 after performing heat treatment for 100 hours under a moisture content condition of 30,000 ppm;
FIG. 4A is an XRD graph measured for the ammonia decomposition catalyst of Comparative Example 1 in an initial state;
FIG. 4B is an XRD graph measured for the ammonia decomposition catalyst of Comparative Example 1 after performing heat treatment at a moisture content of 30,000 ppm and at a temperature of 500°C for 100 hours;
FIG. 5 is a graph illustrating ammonia decomposition rates depending on the steam treatment time at 400°C;
FIG. 6 is a graph illustrating ammonia decomposition rates depending on the steam treatment time at 450°C; and
FIG. 7 is a graph illustrating ammonia decomposition rates depending on the steam treatment time at 500°C.

### [DETAILED DESCRIPTION OF THE INVENTION]

According to embodiments of the present disclosure, an ammonia decomposition catalyst which includes a carrier including lanthanum and an active metal is provided.

According to embodiments of the present disclosure, a method of preparing an ammonia decomposition catalyst using steam treatment is provided.

Hereinafter, embodiments of the present disclosure will be described in more detail.

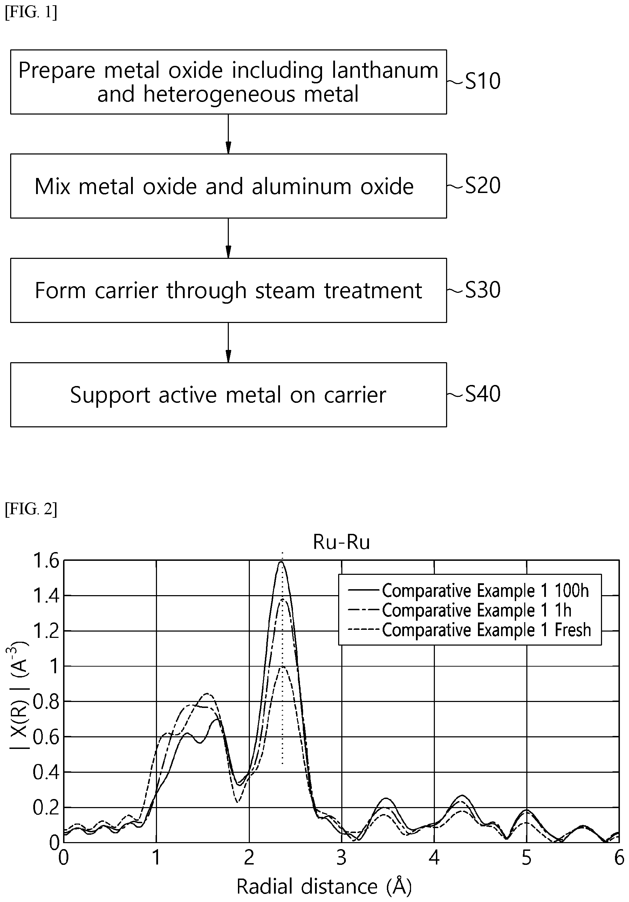

FIG. 1 is a schematic process flowchart for describing a method of preparing an ammonia decomposition catalyst according to exemplary embodiments.

Referring to FIG. 1, a metal oxide including a lanthanum and a heterogeneous metal may be prepared (e.g., step S10).

The term "heterogeneous metal" as used herein may mean metal(s) other than lanthanum, aluminum and the active metal. The heterogeneous metal may be selected from the group of a transition metal, and a rare earth metal.

According to exemplary embodiments, the metal oxide may have a complex oxide form. For example, the metal oxide may include a solid solution of a lanthanum and a heterogeneous metal. The metal oxide may include an oxygen anion, a lanthanum cation and a cation of the heterogeneous metal.

In some embodiments, the metal oxide may be represented by Formula 1 below.

[Formula 1] Laₓ₁Mₓ₂O_{y}

In Formula 1, x1, x2 and y may be in a range of 0<x1<1, 0<x2<1, 1≤y<3, respectively. M may be the heterogeneous metal. In one embodiment, M may be Ce or Zr.

A mixture of the lanthanum and heterogeneous metal-containing metal oxide and an aluminum oxide may be prepared (e.g., step S20).

In some embodiments, the mixture may have a form in which the metal oxide powder and the aluminum oxide powder are mixed.

In some embodiments, the mixture may be a mixed oxide. For example, the mixture may have a form in which the metal oxide and the aluminum oxide are dissolved. The term "mixed oxide" used herein may mean an oxide including two or more metal oxides having different compositions or crystal structures, respectively.

The mixed oxide may be prepared by uniformly mixing the metal oxide and the aluminum oxide, followed by performing heat treatment.

In some embodiments, a content of the lanthanum and heterogeneous metal-containing metal oxide in a total weight of the mixed oxide may be 5% by weight ("wt%") to 40 wt%.

In some embodiments, the content of the aluminum oxide in the total weight of the mixed oxide may be 60 wt% to 95 wt%.

The mixture may be subj ected to steam treatment to form a carrier (e.g., step S30).

The steam treatment means preforming heat treatment on the mixture in a steam atmosphere. The steam atmosphere may mean a gas atmosphere including moisture (H₂O) at a higher concentration or content than the ambient atmosphere.

The carrier may include a metal oxide containing lanthanum and aluminum, i.e. a lanthanum and aluminum-containing complex oxide; and a heterogeneous metal oxide. As the mixture is subjected to heat treatment in the steam atmosphere, the aluminum oxide may react with lanthanum to be converted into a lanthanum and aluminum-containing complex oxide.

For example, a lanthanum element may be extracted from a solid solution of the lanthanum and heterogeneous metal-containing metal oxide by the steam treatment. The extracted lanthanum element may be dissolved in the aluminum oxide in a steam atmosphere to form a lanthanum and aluminum-containing complex oxide.

According to exemplary embodiments, the steam treatment may be performed in a steam atmosphere having a moisture (H₂O) content of 500 ppm to 40,000 ppm. The moisture content may be calculated as a moisture content (based on the volume) in a total volume of gas included in the steam atmosphere.

Within the above range, lanthanum (La) may be eluted from the solid solution of a lanthanum and heterogeneous metal to be easily doped or recrystallized into the aluminum oxide. In addition, by performing heat treatment in the above atmosphere, the heterogeneous metal oxide may have high affinity and interaction characteristics for the active metal. Accordingly, for example, even when the ammonia decomposition catalyst is driven under moisture conditions, aggregation and inactivation between active metals may be suppressed.

In some embodiments, the moisture content of the steam atmosphere may be 500 ppm to 30,000 ppm, or 1,000 ppm to 30,000 ppm. Within the above range, moisture stability, thermal stability and initial performance of the ammonia decomposition catalyst may be further improved.

In one embodiment, the steam atmosphere may be formed through a water bath or a steam generator. For example, a gas for performing heat treatment on the mixed oxide may be supplied into a reactor by passing through the water bath. For example, steam may be generated through bubbling in the steam generator, and the generated steam may be supplied into the reactor together with the gas. The moisture content may be adjusted by controlling the flow rate, flow velocity, residence time of the gas passing through the water bath or the steam generator, or the temperature of the water bath.

The steam treatment may be performed at a temperature of 300°C to 700°C, or 450°C to 550°C. Within the above range, a metal oxide having a perovskite crystal structure, respectively a lanthanum and aluminum-containing complex oxide, may be easily formed, and a specific surface area of the heterogeneous metal oxide may be increased.

The steam treatment may be performed for 1 hour to 100 hours. Within the above range, a carrier having a desired crystal structure may be formed more easily, and the thermal stability and moisture stability of the ammonia decomposition catalyst may be further enhanced.

In one embodiment, the steam treatment may be performed for 5 hours to 50 hours, or 10 hours to 30 hours.

In some embodiments, the steam-containing gas may include hydrogen (H₂). Accordingly, the crystal structure of the carrier may be more stabilized, and the stability and activity of the ammonia decomposition catalyst may be more enhanced.

In one embodiment, the steam-containing gas may further include nitrogen (N₂). A content of hydrogen in the steam-containing gas may be 80% by volume ("vol%") or more, 90 vol% or more, or 95 vol% or more.

According to exemplary embodiments, the heterogeneous metal oxide may have a porous structure and/or structural defects.

For example, the porous structure may mean a form in which the heterogeneous metal oxide has a normal crystal structure but includes a plurality of pores inside and on the surface thereof.

For example, the structural defect may mean a form in which an atom is absent or another atom infiltrates into the crystal structure, a form in which the crystal lattice is distorted or misaligned, or a form in which an atom of the crystal lattice is bonded to another atom or is not present in a normal position. For example, the structural defect may include a point defect, a line defect, a plane defect, a volume defect, etc., and may have a form such as an oxygen vacancy, cracks, folds, wrinkles, tears, overlay, voids, etc.

For example, the porous structure and/or the structural defect may be formed as lanthanum is removed from the lanthanum and heterogeneous metal-containing metal oxide. For example, by performing heat treatment on the mixed oxide in the steam atmosphere, lanthanum may be eluted from the solid solution of lanthanum and the heterogeneous metal, and pores and/or structural defects may be formed in a region where the lanthanum is eluted.

Since the heterogeneous metal oxide has the porous structure and/or defects, the active metal may be selectively supported on the surface and inside of the heterogeneous metal oxide. Therefore, the content and dispersibility of the active metal supported on the carrier may be increased, and more active sites may be formed in the ammonia decomposition catalyst.

In some embodiments, the carrier may have a specific surface area of 80 m²/g to 200 m²/g. The specific surface area may be measured through the Brunauer-Emmett-Teller (BET) method by N₂ adsorption. Within the above range, the dispersibility of the active metal and the activity of the ammonia decomposition catalyst may be further improved while the stability of the carrier may also be improved.

The heterogeneous metal oxide may be represented by Formula 2 below.

[Formula 2] MO_{z}

In Formula 2, z may be in a range of 0<z<3. M may be the heterogeneous metal, for example, Ce or Zr.

In some embodiments, the heterogeneous metal oxide may include cerium oxide (CeO₂) or zirconium oxide (ZrO₂).

The lanthanum and aluminum-containing complex oxide may have a perovskite crystal structure. For example, as the mixture is subjected to heat treatment in the steam atmosphere, the lanthanum element may be formed into a solid solution having a perovskite crystal structure in the aluminum oxide.

Perovskite has a three-dimensional crystal structure formed by combining two types of cations and one type of anion, and may mean a crystal structure of a form substantially similar to the crystal structure of calcium titanium oxide (CaTiO₃). For example, perovskite may have a general formula such as ABX₃ or ABCX₃, and in the general formula, X atoms are located at a center of each crystal plane.

Since the lanthanum and aluminum-containing complex oxide has a perovskite crystal structure, thermal stability of the carrier may be improved, and the activity of the ammonia decomposition catalyst may be further enhanced.

For example, when the active metal becomes electron-rich, the formation of a triple bond (N=N) between nitrogen (N) radicals may be promoted, and a desorption rate of nitrogen from ammonia may be further increased. The reaction between the nitrogen radicals is a rate determining step of the ammonia decomposition reaction, and thereby, the ammonia decomposition rate may be increased as the electrons of the active metal become richer.

The perovskite crystal structure has high electron donating characteristics for the active metal. Thus, as the carrier has a perovskite crystal structure, the electrons of the active metal may be further enriched. Accordingly, the catalytic activity of the ammonia decomposition catalyst may be further enhanced.

The lanthanum and aluminum-containing complex oxide may be represented by Formula 3 below.

[Formula 3] La_{y}Al_{2-y}O₃

In Formula 3, y may be in a range of 0<y<2.

In some embodiments, the lanthanum and aluminum-containing oxide may include lanthanum aluminate (LaAlO₃).

In some embodiments, a content of the heterogeneous metal oxide in the total weight of the carrier may be 5 wt% to 30 wt%.

In some embodiments, a content of the lanthanum and aluminum-containing complex oxide in the total weight of the carrier may be 70 wt% to 95 wt%.

When the contents of the heterogeneous metal oxide and the lanthanum and aluminum-containing complex oxide are within the above range, the conversion performance and lifespan performance of the ammonia decomposition catalyst may be further improved while the dispersion of the active metal and the catalytic activity may also be further improved.

The active metal may be supported on the carrier (e.g., step S40).

The ammonia decomposition catalyst may be prepared by supporting the active metal on the carrier. For example, the ammonia decomposition catalyst may be a supported catalyst.

The ammonia decomposition catalyst may selectively promote the decomposition reaction of ammonia (NH₃), and hydrogen (H₂) may be formed from ammonia by the ammonia decomposition catalyst. The ammonia decomposition reaction means a reaction in which interatomic bonds in ammonia (NH₃) are broken and ammonia is converted into hydrogen (H₂) and nitrogen (N₂).

The active metal may promote an ammonia dehydrogenation reaction as an active component of the ammonia decomposition reaction.

In some embodiments, the active metal may include a transition metal and/or a platinum group metal. The transition metal and the platinum group metal may easily receive electrons to be converted into an electron-rich state, thereby further promoting the reaction of nitrogen radicals. Accordingly, the catalytic activity of the ammonia decomposition catalyst may be strengthened, and the rate of the ammonia decomposition reaction may increases.

In some embodiments, the active metal may include at least one of metals belonging to groups 8 to 10 in the periodic table.

In one embodiment, the active metal may be selected from the group of osmium (Os), nickel (Ni), iron (Fe), cobalt (Co), platinum (Pt), palladium (Pd), ruthenium (Ru), vanadium (V), copper (Cu), chromium (Cr), tungsten (W), molybdenum (Mo), iridium (Ir), rhodium (Rh), etc.

In some embodiments, the active metal may include ruthenium (Ru). Ruthenium (Ru) has strong catalytic activity and may further promote the dehydrogenation decomposition reaction, and may further increase the ammonia decomposition rate and conversion rate.

In one embodiment, the ammonia decomposition catalyst may further include a promoter. The promoter may include a metal belonging to group 1 to group 2 in the Periodic Table of Elements, for example, an alkali metal and/or an alkaline earth metal. The promoter may be supported on the carrier together with the active metal.

In one embodiment, the promoter may include at least one of cesium (Cs), sodium (Na), potassium (K), lithium (Li), rubidium (Rb), francium (Fr), barium (Ba), calcium (Ca), strontium (Sr), beryllium (Be) and magnesium (Mg). These may be included alone or in combination of two or more thereof.

In one embodiment, the promoter may include an alkali metal. An alkali metal element may include one electron in the outermost electron shell thereof thus to act as an electron donor. Therefore, the electrons of the active metal such as ruthenium may be enriched by the promoter, and the reaction of nitrogen radicals by the active metal may be further promoted, thereby the ammonia decomposition rate may be enhanced.

For example, the ammonia decomposition catalyst may include cesium (Cs) as a promoter. Cesium has high electron donating properties, such that the activity of the ammonia decomposition catalyst may be further enhanced. In addition, active sites on the surface of the active metal may be further increased by cesium, such that the aggregation of the active metal may be suppressed and the dispersion may be further improved.

In some embodiments, the carrier and the active metal compound may be subjected to heat treatment. For example, the active metal compound may be added to or mixed with the carrier, followed by performing heat treatment. Due to the heat treatment, the active metal derived from the active metal compound may be supported on or doped in the carrier.

In one embodiment, the active metal compound may use at least one of a nitrate, an oxide, a chloride, a bromide, a fluoride, a hydroxide, a carbonate, an acetate, a sulfate, a carbonate, a naphthenate, an isopropoxide and an organometallic complex of the active metal. These may be used alone or in combination of two or more thereof.

In one embodiment, the heat treatment may be performed in a reducing atmosphere. For example, the carrier and the active metal compound may be subjected to a reduction treatment, such that the dispersibility of the active metal within the carrier may be further improved.

In one embodiment, the reduction treatment of the carrier and the active metal compound may be performed using a reducing gas such as hydrogen, carbon monoxide, or hydrocarbon, etc., or may be performed by adding a reducing agent such as hydrogen peroxide, hydrogen sulfide, lithium aluminum hydride, or lithium borohydride, etc.

In one embodiment, the complex oxide and the active metal compound may be subjected to heat treatment in a reducing gas atmosphere. For example, the reducing gas atmosphere may include hydrogen (H₂).

In one embodiment, the reducing gas may further include nitrogen (N₂) and/or carbon dioxide (CO₂) as a dilution gas.

In one embodiment, the reducing gas may include 10 to 100 vol% of hydrogen in a total 100 vol% of the reducing gas. Accordingly, the dispersibility of the active metal within the carrier may be further improved.

In some embodiments, the heat treatment temperatures of the carrier and the active metal compound may be 1,000°C or less or 900°C or less, and 200°C or more or 400°C or more. Within the above range, the active metal may be supported on or doped in the carrier, and the agglomeration of the active metals may be suppressed, thereby further enhancing the dispersion. Accordingly, the activity and stability of the ammonia decomposition catalyst may be further enhanced.

According to exemplary embodiments, the active metal may be selectively supported on or doped in the heterogeneous metal oxide.

As the heterogeneous metal oxide is formed by steam treatment, the affinity and interaction between the heterogeneous metal oxide and the active metal may be increased. In addition, the heterogeneous metal oxide has a porous structure and a high specific surface area, such that supporting sites of the active metal may be relatively increased.

For example, the content of the active metal supported on the heterogeneous metal oxide may be greater than the content of the active metal supported on the lanthanum and aluminum-containing complex oxide. Accordingly, the moisture stability of the ammonia decomposition catalyst may be further increased.

In one example, an ammonia gas may contain moisture in an environment where the ammonia decomposition catalyst is used. For example, commercial ammonia gas may contain about 0.5 vol% of moisture. However, when the ammonia gas contains the moisture, the activity and stability of the ammonia decomposition catalyst may be decreased by the moisture. For example, when the ammonia decomposition catalyst is subjected to steam treatment, bonding and agglomeration between the active metals may occur, the dispersibility of the active metal may be decreased, and the particle size may be increased. In this case, the dehydrogenation reaction speed and efficiency by the active metal may be decreased.

According to exemplary embodiments, the carrier may be formed by steam treatment such that the heterogeneous metal oxide may have high affinity and interaction characteristics for the active metal. As the active metal is doped in the heterogeneous metal oxide having strong interaction for the active metal, the aggregation between ruthenium particles may be suppressed even if the ammonia gas contains moisture.

According to exemplary embodiments, the heterogeneous metal oxide has a porous structure, such that the dispersibility of the active metal may be further enhanced. Accordingly, the moisture stability of the ammonia decomposition catalyst may be improved, and the performance and activity of the ammonia decomposition catalyst may be maintained for a long period of time even if the ammonia decomposition reaction is performed under steam conditions.

In some embodiments, the active metal and the promoter may have a particle form. For example, the active metal and the promoter may have a particle size of 0.1 nm to 30 nm, 1 nm to 20 nm, or 1 nm to 5 nm. Within the above range, the dispersibility of the active metal and promoter and the active site of the ammonia decomposition catalyst may be further increased, as well as the ammonia decomposition speed and conversion rate may be further improved.

In some embodiments, the content of the active metal may be 0.1 wt% or more, 0.5 wt% or more, or 1.0 wt% or more based on the total weight of the ammonia decomposition catalyst. Within the above range, the active site of the active metal is increased, such that the ammonia decomposition catalyst may have high catalytic activity. Accordingly, the initial performance of the ammonia decomposition catalyst may be further improved, and the decomposition rate and conversion rate of ammonia may be increased.

In some embodiments, the content of the active metal may be 3.0 wt% or less, 2.5 wt% or less, or 2.0 wt% or less based on the total weight of the ammonia decomposition catalyst. Within the above range, the dispersibility of the active metal may be further improved, and the thermal stability and moisture stability of the ammonia decomposition catalyst may be enhanced.

In some embodiments, the content of the promoter may be 0.1 wt% to 10 wt%, or 0.2 wt% to 5 wt% based on the total weight of the ammonia decomposition catalyst. Within the above range, the activity of the ammonia decomposition catalyst may be further enhanced.

Hereinafter, embodiments of the present disclosure will be further described with reference to specific preparative examples. Examples and comparative examples included in the preparative examples only illustrate the present disclosure and are not intended to limit the appended claims. It will be apparent those skilled in the art that various alterations and modifications are possible within the scope of the present disclosure, and such alterations and modifications are duly included in the appended claims.

### Preparative Example: Preparation of ammonia decomposition catalyst

### (1) Example

A mixed oxide of lanthanum-cerium complex oxide (LaCeO₂) and alumina (Al₂O₃) was prepared. The mixed oxide was subj ected to heat treatment with 200 sccm of 100 vol% hydrogen (H₂) gas passing through the steam generator(bubbler) so that containing 30,000 ppm of moisture (H₂O) based on the volume and at a temperature of 500°C for 24 hours to form a carrier.

It was confirmed that CeO₂ and LaAlO₃ having a perovskite crystal structure was formed through X-ray diffraction analysis (XRD). Specifically, in the XRD graph of the carrier, peaks at about 28.3° and about 32.8°, which are the unique diffraction peaks of CeO₂, were observed, and peaks at about 23.4° and about 33.2°, which are the unique diffraction peaks of LaAlO₃, were observed.

XRD analysis was performed using XRD X'pert Pro (Marvern Panalytical) under conditions of 300 mA current, 50 kV voltage, wavelength of Cu Kα (1.5428 Å), 5 degree min⁻¹ scan speed, and 2θ = 10° to 80°.

An ammonia catalyst precursor was prepared by impregnating ruthenium nitrosyl nitrate into 1 g of the carrier. The ruthenium compound was added so that the content of ruthenium (Ru) was 1.4 wt% based on the total weight of the carrier and ruthenium.

The ammonia catalyst precursor was dried, and subjected to reduction treatment at 600°C for 4 hours in a 100% hydrogen atmosphere to prepare an ammonia decomposition catalyst (Ru/HT-CeLaAl).

### (2) Comparative Example 1

An ammonia decomposition catalyst (Ru/CeLaAl) was prepared in the same manner as in Example 1, except that the mixed oxide of the lanthanum-cerium complex oxide (LaCeO₂) and alumina (Al₂O₃) was subjected to heat treatment at a temperature of 500°C for 2 hours in a hydrogen (H₂) gas atmosphere which did not contain moisture.

### (3) Comparative Example 2

An ammonia catalyst precursor was prepared by impregnating ruthenium nitrosyl nitrate into 1 g of an alumina carrier. The ruthenium nitrosyl nitrate was added so that the content of the ruthenium (Ru) was 1.4 wt% based on the total weight of the alumina carrier and ruthenium.

The ammonia catalyst precursor was dried, and subjected to reduction treatment in a 100 vol% hydrogen atmosphere and at a temperature of 600°C for 4 hours to prepare an ammonia decomposition catalyst (Ru/Al).

### (4) Comparative Example 3

An ammonia catalyst precursor was prepared by impregnating ruthenium nitrosyl nitrate and potassium nitrate into 1 g of an alumina carrier. The ruthenium nitrosyl nitrate was added so that the content of ruthenium (Ru) was 1.4 wt% based on the total weight of the alumina carrier and ruthenium.

The ammonia catalyst precursor was dried, and subjected to reduction treatment in a 100 vol% hydrogen atmosphere and at a temperature of 600°C for 4 hours to prepare an ammonia decomposition catalyst (Ru/K-Al).

### (5) Comparative Example 4

An ammonia catalyst precursor was prepared by impregnating ruthenium nitrosyl nitrate and cesium nitrate into 1 g of an alumina carrier. The ruthenium nitrosyl nitrate was added so that the ruthenium (Ru) content was 1.4 wt% based on the total weight of the alumina carrier and ruthenium.

The ammonia catalyst precursor was dried, and subjected to reduction treatment in a 100 vol% hydrogen atmosphere and at a temperature of 600°C for 4 hours to prepare an ammonia decomposition catalyst (Ru/Cs-Al).

### Experimental Example 1

### (1) Evaluation of moisture stability

The ammonia decomposition catalysts of the example and Comparative Example 1 were subjected to heat treatment under a condition listed in Table 1 below, and then an ammonia decomposition performance was evaluated. Specifically, under the moisture content condition of 30,000 ppm, 100 vol% hydrogen (H₂) gas containing 30,000 ppm of moisture was used. Under the moisture content condition of 6,000 ppm, nitrogen (N₂) containing 30,000 ppm of moisture and hydrogen (H₂) without moisture were mixed in a volume ratio of 20:80 and used.

The ammonia decomposition catalyst was subj ected to heat treatment at a temperature of 500°C for the time listed in Table 1 below under each moisture content condition. Ammonia gas was supplied to the ammonia decomposition catalyst that has been subj ected to heat treatment to measure the ammonia decomposition rate.

The residual ammonia content at a rear end of a reactor was measured using a gas chromatography (GC) equipped with a thermal conductivity detector (TCD). The ammonia decomposition rate was calculated using the following equation.

Ammonia decomposition rate (%) = {(Supply ammonia content - Residual ammonia content) / Supply ammonia content} × 100.

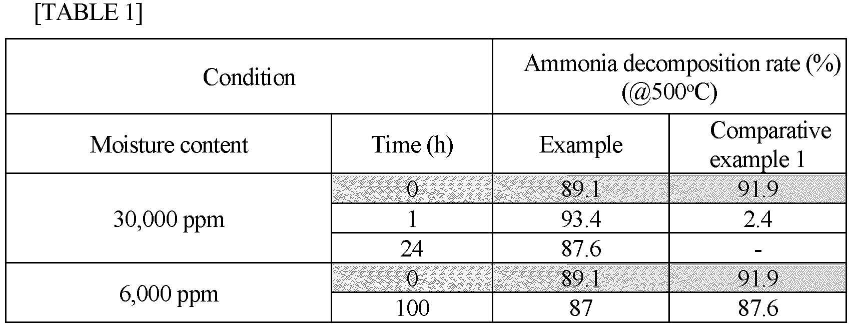

Referring to Table 1, in the case of the example, the ammonia decomposition rate by the ammonia decomposition catalyst was maintained at a high level even if the ammonia decomposition catalyst was exposed to the steam atmosphere.

For example, in the case of the example, the ammonia decomposition rate of the ammonia decomposition catalyst that has been subjected to heat treatment for 24 hours in a steam atmosphere of 30,000 ppm was decreased by 1.5% compared to without the heat treatment, and the ammonia decomposition rate of the ammonia decomposition catalyst that has been subjected to heat treatment for 100 hours in a steam atmosphere of 6,000 ppm was decreased by 2.1% compared to without the heat treatment.

However, in the case of Comparative Example 1, when performing heat treatment for 1 hour or more in a steam atmosphere of 30,000 ppm, ammonia was not substantially decomposed by the ammonia decomposition catalyst. That is, the decomposition rate is only 2.4 %. In addition, when the ammonia decomposition catalyst was subjected to heat treatment for 100 hours in a steam atmosphere of 6,000 ppm, the ammonia decomposition rate was reduced by 4% or more.

### (2) Analysis of EXAFS crystal structure

The sintering phenomenon of the active metal in the ammonia decomposition catalyst (Ru/CeLaAl) of Comparative Example 1 was analyzed through an extended X-ray absorption fine structure (EXAFS). Specifically, the Ru K-edge XAFS was measured at room temperature using the 8C beamline (nano-XAFS, 4 keV to 20 keV, 10¹² photons/sec) of the Pohang Accelerator Laboratory (PAL PLSII).

The attached FIG. 2 is a Ru K-edge EXAFS graph in an initial state (fresh), a state after heat treatment at a moisture content of 30,000 ppm and at a temperature of 500°C for 1 hour (1 h), and a state after heat treatment at a moisture content of 30,000 ppm and at a temperature of 500°C for 100 hours (100 h).

Referring to FIG. 2, Ru-Ru metal bonds (approximately 2.3Å) are confirmed in the ammonia decomposition catalysts. As the heat treatment time, at which the ammonia decomposition catalyst is exposed to a moisture environment, was increased, the Ru-Ru metal bonds were increased.

In the case of Comparative Example 1, as the ammonia decomposition catalyst was subjected to heat treatment in the steam atmosphere, the coordination number of the ruthenium particles was increased, and accordingly, it can be seen that the ruthenium particles were sintered with each other.

### (3) Analysis of STEM image

The ammonia decomposition catalyst (Ru/CeLaAl) of Comparative Example 1 was photographed using high-angle annular dark-field scanning transmission electron microscopy (STEM). The STEM image was measured using a high-performance TEM (HR-TEM, Titan cubed G2 60-300).

Specifically, the STEM image was captured using a scanning electron microscope at the initial state, the state after heat treatment at a moisture content of 30,000 ppm and at a temperature of 500°C for 1 hour, and the state after heat treatment at a moisture content of 30,000 ppm and at a temperature of 500°C for 100 hours.

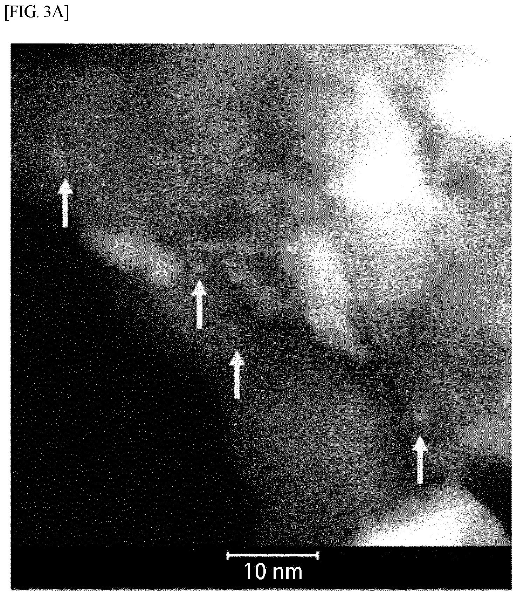

FIG. 3A is an STEM image of the ammonia decomposition catalyst of Comparative Example 1 in an initial state.

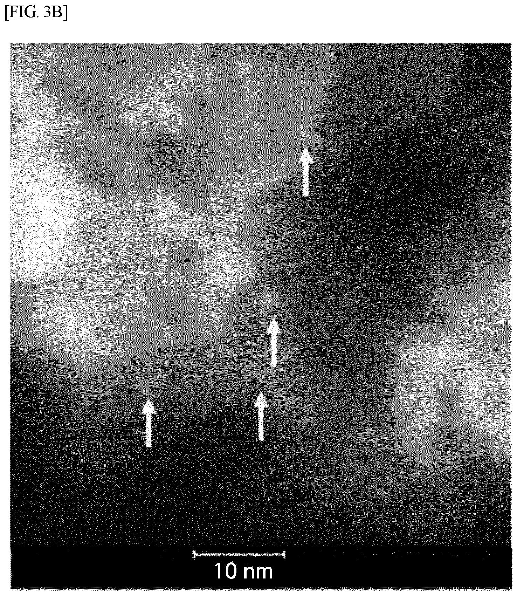

FIG. 3B is an STEM image of the ammonia decomposition catalyst of Comparative Example 1 after performing heat treatment for 1 hour under a moisture content condition of 30,000 ppm.

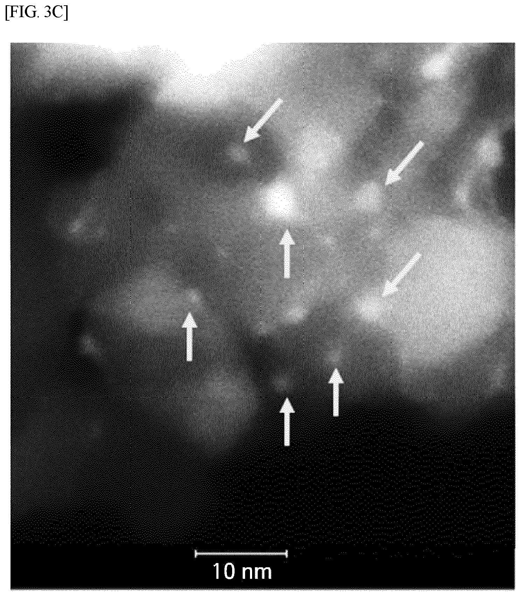

FIG. 3C is an STEM image of the ammonia decomposition catalyst of Comparative Example 1 after performing heat treatment for 100 hours under a moisture content condition of 30,000 ppm.

In FIGS. 3A to 3C, the region indicated by the arrows represent is a region illustrating ruthenium particles supported on the carrier. Referring to FIGS. 3A to 3C, the size of the ruthenium particles was increased as the exposure time to the moisture was increased. It can be confirmed that sintering and agglomeration between the ruthenium particles are increased by performing heat treatment in the steam atmosphere.

### (4) Analysis of XRD crystal structure

The crystal structure of the ammonia decomposition catalyst (Ru/CeLaAl) of Comparative Example 1 was measured through XRD analysis. The XRD analysis was performed under conditions of 300 mA current, 50 kV voltage, Cu Kα wavelength (1.5428 Å), 5 degree min-1 scan speed, and 2θ = 10° to 80°.

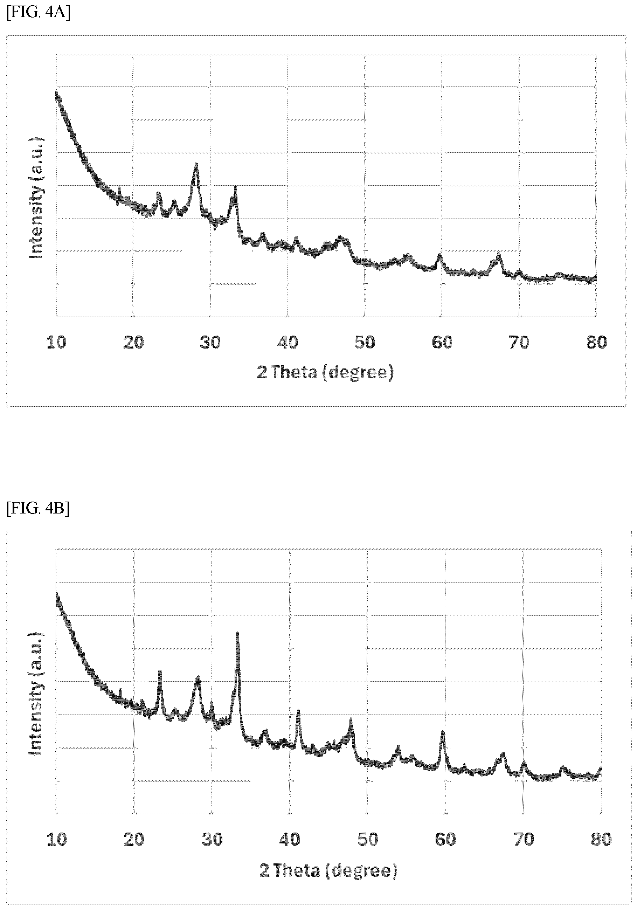

FIG. 4A is an XRD graph measured for the ammonia decomposition catalyst of Comparative Example 1 in an initial state. FIG. 4B is an XRD graph measured for the ammonia decomposition catalyst of Comparative Example 1 after heat treatment at a moisture content of 30,000 ppm and at a temperature of 500°C for 100 hours.

Referring to FIG. 4A and FIG. 4B, the crystal structure of the ammonia decomposition catalyst was changed as it was subjected to heat treatment in a steam atmosphere. Referring to FIG. 4B, the intensities of the peaks at about 23° , about33° , about 42° , about 48° , about54° , about60° , about 70° , about 76° and about 80° corresponding to perovskite were increased compared to the initial state. The crystal structure of the carrier was also changed together with the agglomeration of the active metals, as it was exposed to moisture in a high-temperature environment.

### (5) Measurement of dispersion and specific surface area

The dispersion and specific surface area of the ammonia decomposition catalyst (Ru/CeLaAl) of Comparative Example 1 were measured. Specifically, the dispersion and specific surface area in the initial state and in the state after heat treatment at a moisture content of 30,000 ppm and a temperature of 500°C for 100 hours were measured, respectively.

The dispersion of the active metal in the ammonia decomposition catalyst was measured using a carbon monoxide adsorption evaluation device (Micrometirics, ASAP 2020). 0.1 g of catalyst was charged into an adsorption tube, followed by reducing at 300°C and decreasing the temperature to measure the saturated adsorption amount of carbon monoxide at room temperature. The dispersion was calculated by considering that the adsorbed carbon monoxide molecules were due to combination adsorption with the ruthenium catalyst, and.

The dispersion (%) was calculated by the following equation. Dispersity (%) = (Content of surface exposed active metal measured by adsorption of carbon monoxide / Content of active metal used in catalyst) × 100

The specific surface area of the ammonia decomposition catalyst was measured by the BET method based on nitrogen gas adsorption using a specific surface area measuring device (TriStar II Plus, MICROMERITCS).

Measurement results are listed in Table 2 below.

**[TABLE 2]**

| Division | Dispersion (%) | Specific surface area (m²/g) |
|---|---|---|
| Initial state | 61.3 | 56.7 |
| Heat treatment for 100 hours | 33.7 | 108.4 |

Referring to Table 2 above, the dispersion of the ruthenium particles was decreased due to the agglomeration of the ruthenium particles by performing heat treatment in the steam atmosphere.

### Experimental Example 2

Ammonia decomposition rates depending on the steam treatment time for the ammonia decomposition catalysts of the example and comparative examples were measured.

Specifically, the ammonia decomposition catalysts of the example and comparative examples were subjected to heat treatment at a temperature of 400°C, 450°C and 500°C in a 100 vol% hydrogen (H₂) gas atmosphere containing 30,000 ppm of moisture. The ammonia decomposition rates of the catalysts depending on the heat treatment time were measured.

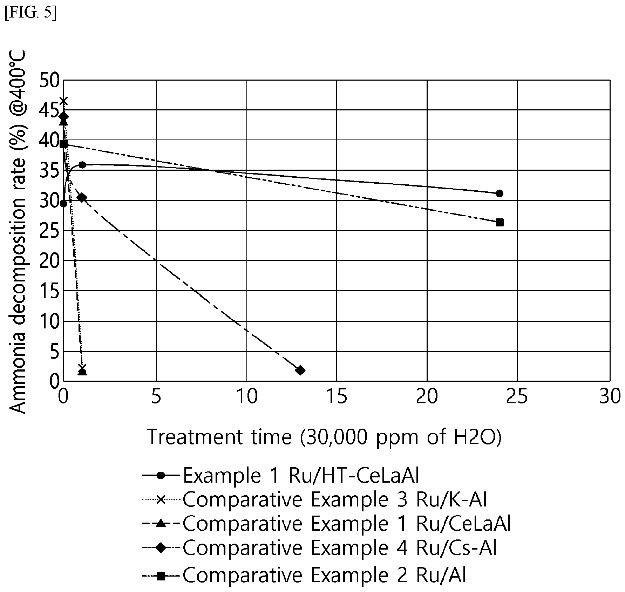

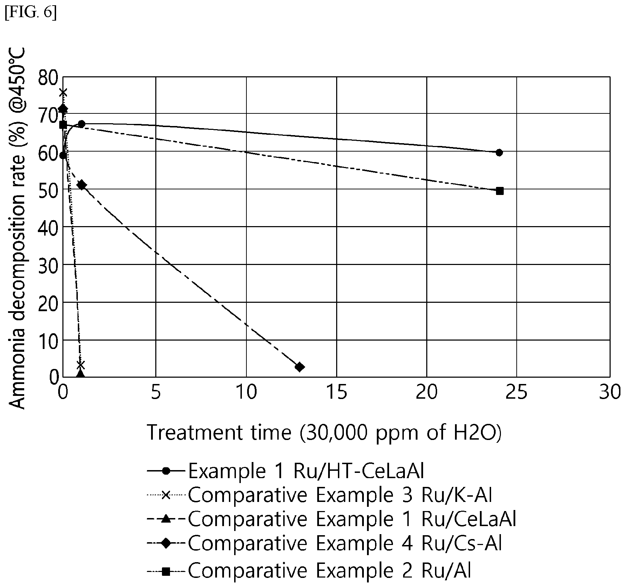

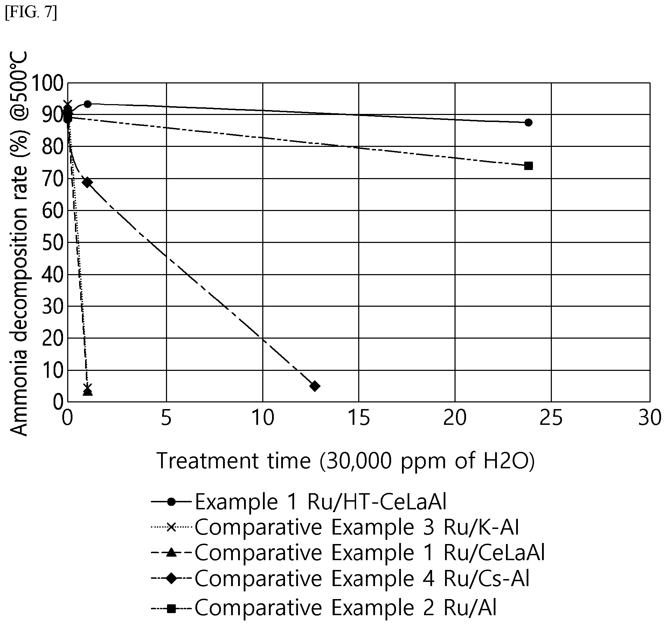

Measurement results are shown in the attached FIGS. 5 to 7. FIG. 5 is a graph illustrating the ammonia decomposition rates depending on the heat treatment time at a reaction temperature of 400°C, and FIG. 6 is a graph illustrating the ammonia decomposition rates depending on the heat treatment time at a reaction temperature of 450°C. FIG. 7 is a graph illustrating the ammonia decomposition rates depending on the heat treatment time at a reaction temperature of 500°C.

Referring to FIGS. 5 to 7, in the case of the ammonia decomposition catalyst of the example, the ammonia decomposition rate by the ammonia decomposition catalyst was maintained at a high level even if the exposure time to the moisture was increased.

However, in the case of the comparative examples, the ammonia decomposition rate was decreased as the exposure time of the ammonia decomposition catalyst to the moisture was increased.

In the case of Comparative Example 2, when the ammonia decomposition catalyst was exposed to moisture for 10 hours or more, the ammonia decomposition rate was decreased by 5% or more compared to the initial stage as shown in Figures 5 to 7. In addition, the ammonia decomposition rate was significantly decreased as the reaction temperature of the catalyst was increased.

In the case of Comparative Example 4 containing a promoter, a cesium nitrate, the ammonia decomposition rate was rapidly decreased even when the exposure time of the ammonia decomposition catalyst to the moisture was 15 hours or less at all temperatures.

In the case of Comparative Examples 1 and 3, even if the ammonia decomposition catalyst was exposed to the steam atmosphere only for 2.5 hours or less and the catalyst of Comparative Example 3 contained a promoter, a potassium nitrate, the ammonia decomposition catalysts in Comparative Examples 1 and 3 did not have catalytic activity, and a dehydrogenation reaction was not performed.

## Claims

1. A method of preparing a catalyst for ammonia decomposition, the method comprising:
preparing a mixture of a lanthanum and heterogeneous metal-containing metal oxide and an aluminum oxide;
performing steam treatment on the mixture to form a carrier; and
supporting an active metal on the carrier.

2. The method according to claim 1, wherein the steam treatment is performed at a temperature of 300°C to 700°C, and/or wherein the steam treatment is performed in a steam atmosphere having a moisture content of 500 ppm to 40,000 ppm for 1 hour to 100 hours.

3. The method according to claim 1or 2, wherein the carrier comprises a lanthanum and aluminum-containing complex oxide and a heterogeneous metal oxide, optionally wherein the aluminum oxide reacts with lanthanum by the steam treatment to be converted into the lanthanum and aluminum-containing complex oxide.

4. The method according to claim 4 or claim 5, wherein the heterogeneous metal oxide has a porous structure and/or a structural defect,
optionally the porous structure and/or the structural defect is formed as lanthanum is removed from the lanthanum and heterogeneous metal-containing metal oxide.

5. The method according to one of claims 3 to 4, wherein the lanthanum and aluminum-containing complex oxide has a perovskite crystal structure.

6. The method according to one of claims 1 to 5, wherein the step of supporting an active metal on the carrier includes performing heat treatment on the carrier and the active metal in a reducing atmosphere,
optionally the reducing atmosphere includes hydrogen, preferably further includes nitrogen and/or carbon dioxide.

7. The method according to claim 6, wherein a content of the active metal supported on the heterogeneous metal oxide is greater than a content of the active metal supported on the lanthanum and aluminum-containing complex oxide.

8. The method according to one of claims 1 to 7, wherein the active metal is selected from the group of osmium (Os), nickel (Ni), iron (Fe), cobalt (Co), platinum (Pt), palladium (Pd), ruthenium (Ru), vanadium (V), copper (Cu), chromium (Cr), tungsten (W), molybdenum (Mo), iridium (Ir), rhodium (Rh), preferably the active metal includes ruthenium (Ru);
and/or
wherein the heterogeneous metal includes cerium (Ce) or zirconium (Zr).

9. A catalyst for ammonia decomposition prepared by the method according to one of claims 1 to 8.

10. The catalyst for ammonia decomposition according to claim 9, wherein the catalyst comprises: a carrier comprising a lanthanum and aluminum-containing complex oxide, and a heterogeneous metal oxide having a porous structure or a structural defect; and
an active metal supported on the carrier,
wherein a content of the active metal supported on the heterogeneous metal oxide is greater than a content of the active metal supported on the lanthanum and aluminum-containing complex oxide.

11. A catalyst for ammonia decomposition which includes: a carrier including a lanthanum and aluminum-containing complex oxide, and a heterogeneous metal oxide having a porous structure and/or a structural defect; and an active metal supported on the carrier, wherein the active metal is dispersed in the carrier without aggregation of the active metal, wherein when the catalyst is subjected to a steam treatment the ammonia decomposition rate of the catalyst under a condition of 30,000 ppm of water moisture does not decrease below 10%, or not below 30 %, when measured at any temperature among 400°C, 450°C and 500°C respectively at a time point of 20 hours after start.

12. The catalyst for ammonia decomposition according to any one of claims 9 to 11, wherein

13. The catalyst for ammonia decomposition according to any one of claims 9 to 12, wherein the carrier has a specific surface area of 80 m²/g to 200 m²/g.

14. The catalyst for ammonia decomposition according to any one of claims 9 to 13 or claim 13, wherein the lanthanum and aluminum-containing complex oxide has a perovskite crystal structure.

15. The catalyst for ammonia decomposition amount of any one of claims 9 to 14,
wherein the content of the active metal is 0.1 wt% or more and/or 3.0 wt% or less based on the total weight of the ammonia decomposition catalyst,
and/or further includes a promoter supported on the carrier together with the active metal.
